Europäisches Patentamt

**European Patent Office**

**Office européen des brevets**

(19)

(11) Publication number: **0 242 927 B1**

# EUROPEAN PATENT SPECIFICATION

(12)

(45) Date of publication of patent specification: **25.11.92**   (51) Int. Cl.⁵: **F16K 5/06**

(21) Application number: **87200746.3**

(22) Date of filing: **16.04.87**

(54) **Ball Valve.**

(30) Priority: **22.04.86 NL 8601033**

(43) Date of publication of application:
**28.10.87 Bulletin  87/44**

(45) Publication of the grant of the patent:
**25.11.92 Bulletin  92/48**

(84) Designated Contracting States:
**BE DE FR GB LU NL**

(56) References cited:
**DE-A- 1 679 946          DE-A- 2 636 459
DE-A- 2 917 200          DE-A- 3 023 230
GB-A- 1 059 273          GB-A- 1 293 381**

(73) Proprietor: **Lovink Terborg B.V.
Lovinkweg 3
NL-7061 DT Terborg(NL)**

(72) Inventor: **Van den Hout, Jan Simon
Eksterhof 3
NL-7051 WP Varsseveld(NL)**
Inventor: **Kaptein, Bartholomeus Johannes
Cappettilaan 20
NL-7071 CS Ulft(NL)**

(74) Representative: **Prins, Hendrik Willem et al
Octrooibureau Arnold & Siedsma Sweelinck-
plein, 1
NL-2517 GK The Hague(NL)**

EP 0 242 927 B1

## Description

The invention relates to a ball valve comprising a housing with a cavity in rotation symmetry around a symmetrical axis, in which a valve ball is accommodated for rotation by means of a control shaft rotatable from outside, which valve is close fitting in the cavity and is provided with a passage, and which has the same form as the cavity and fits tightly into it, said cavity being accessible from the outside via two openings extending through the wall of said housing, which passage can be moved between two extreme positions by rotation of said valve ball by means of said control shaft, in the first of which positions said passage connects both openings to each other and in the second of which said valve ball impedes the connection between both openings, said cavity and at least the surfaces connecting onto it of said openings in said housing being coated with an undivided lining sealing against the surface of said valve ball, said lining extending over a certain length along the control shaft, in form an axially extending sleeve, in the area of the cavity a resilient layer for supporting the lining being arranged.

Such a ball valve is known from DE-A-1 679 946.

It is a purpose of the invention to construct a ball valve of this type such that it is highly gas tight and resistant to even the most agressive media, if necessary under high pressure.

Thereto the ball valve according to the invention is characterized in that the external surfaces and the passage of the valve ball are coated with a continuous covering layer and in that a V-ring packing set is arranged around the control shaft and is subjected to pressure by a spring which by one end presses on the axially outer side of the V-ring packing set and by the other end is fixedly supported relative to the housing, the axially inner side of the packing set exerting a pressure on the continuous covering layer of the valve ball.

The V-ring arrangement has the advantage of being able to exert relatively high forces not only in axial direction, but also in transverse directions resulting from the V-shape. Therefore, the use of such a V-ring packing set is highly contributing to the sealing properties of the valve.

It should be noted, that from GB-A-1 059 273 a ball valve is known which is different from the above-identified document in that it does not show a resilient layer for supporting the lining in the area of the cavity. It does, however, different from the cited prior art reference disclose the surfaces of the valve plug and the passage being coated with a continuous covering layer. The basic configuration according to the invention as specified above, however, is known from neither of the two prior art references discussed.

Further features and particulars of the invention will now be explained with reference to the accompanying drawing.

In the drawing:

Fig. 1 shows a partly broken away perspective view of a valve;

Fig. 2 is the detail II from fig. 1;

Fig. 3 shows a schematic outline of a first step in the manufacture of a valve according to the invention;

Fig. 4 shows the final stage of this manufacture; and

Fig. 5 shows a variant partially in longitudinal section and partially in side view.

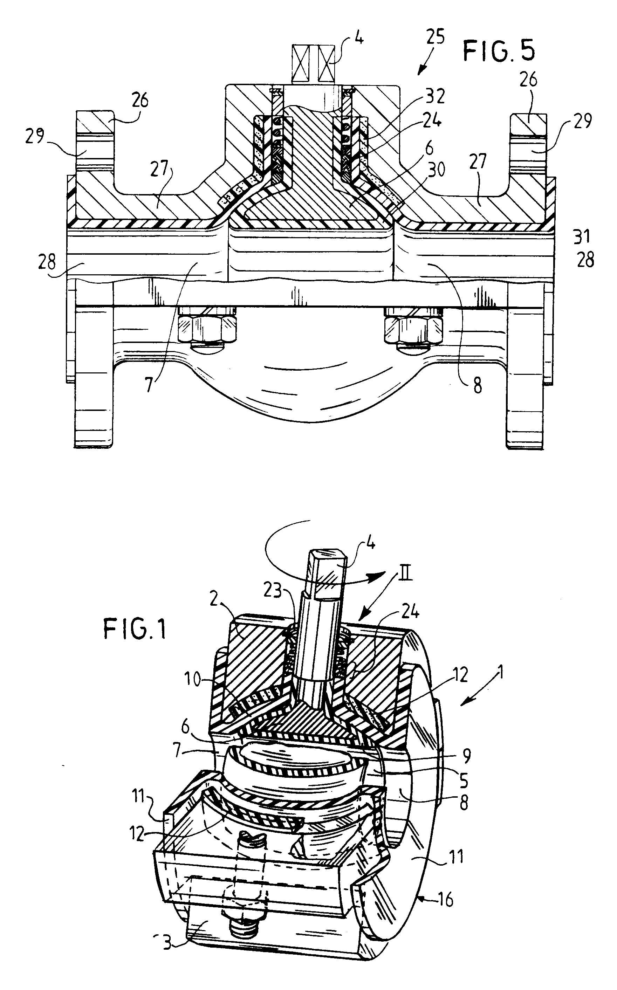

Fig. 1 shows a valve 1 comprising a housing consisting of an upper half 2 and a lower half 3 and having a cavity in rotation symmetry round a symmetrical axis in which a valve ball 6 is accommodated for rotation by means of a control shaft 4 rotatable from outside, which valve ball is close fitting in the cavity and is provided with a passage 5, and which has the same form as the cavity and fits tightly into it, the cavity being accessible from the outside via two openings 7, 8 extending through the wall of the housing 2, 3, which passage 5 can be moved between two extreme positions by rotation of the valve ball 6 by means of the control shaft 4, in the first of which positions the passage 5 brings both openings 7, 8 into open connection with each other and in the second of which the valve ball 6 impedes the connection between both openings 7, 8. Valve ball 6 is manufactured in this embodiment of cast iron and coated with a layer 9 of PTFE which extends for some distance over control shaft 4. This coating layer 9 of PTFE also extends over the surface of passage 5 and forms one whole with it.

The inner surface of the cavity is also coated with a PTFE layer, indicated with the reference numeral 10, which likewise extends for some distance over the control shaft, doing so via the layer 9, as well as on the outer surface of the housing, over the edge zones of the openings. These annular zones indicated by 11 of the PTFE covering layer 10 can be used as sealing elements for coupling on lines.

Arranged between the housing parts 2, 3 and the PTFE layer 10 is a resilient layer 12 of perforated rubber such that the parts which can be rotated relative to each other can rest against each other with sufficient pressure.

In the embodiment in question the valve ball takes a roughly spherical form.

In this embodiment the layer 10 can also consist of rubber.

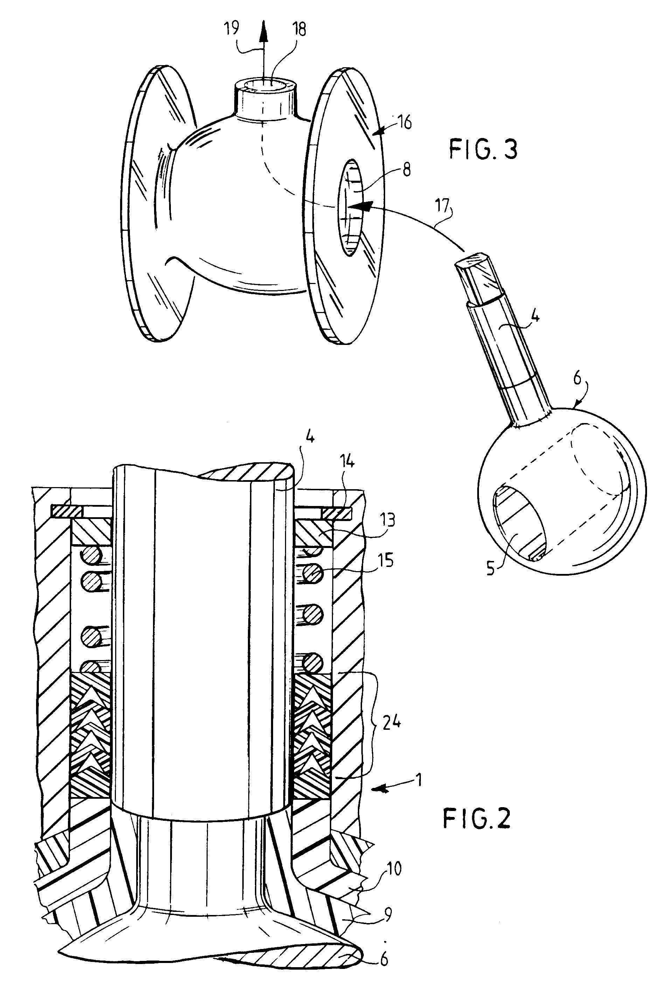

Fig. 2 shows the detail II as according to fig. 1. From this detail can be seen the manner of sealing of the rotary control shaft 4 in housing 2. Use is made of a so-called V-ring packing set 24 which is subject to pressure from a spring 15 which on the one side presses on the outer end of the V-ring packing set 24 and on the other supports on a support ring 13 locked into the housing by a retaining ring 14. The other end of set 24 supports on the PTFE layer 10 round control shaft 4.

Fig. 3 shows the PTFE liner body 16 which is also shown in fig. 1 with that reference numeral. After possible heating to further the elastic deformability of body 16 the valve ball 6 can be introduced into it via opening 8 (or opening 7) as according to arrow 17. Control shaft 4 can then be placed as according to arrow 19 through the opening 18 intended for that purpose such that the roughly spherical valve ball 6 is finally located in the cavity intended for that purpose inside the PTFE liner body 16.

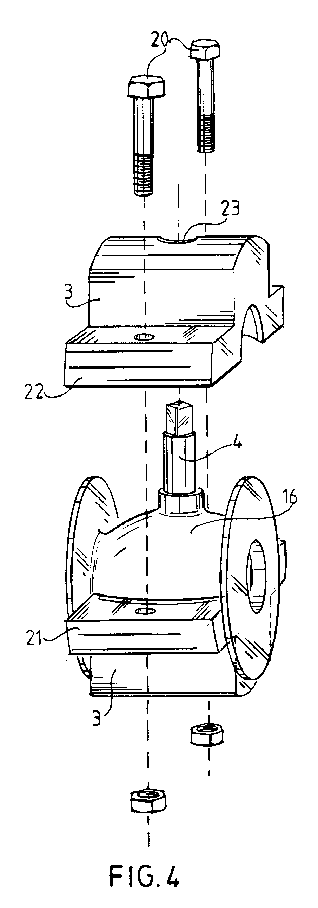

Fig. 4 shows the final stage of manufacture of the valve. The unit produced in accordance with fig. 3 consisting of liner body 16 with the valve ball 6 arranged in it are accommodated in a steel housing, this being carried out with the fitting of two half-housings 2, 3 and the coupling together of these half-housings 2, 3 by means of bolts 20 via flanges 21, 22 thus retaining the PTFE liner body 16 with the valve ball accommodated therein. An opening 23 in the upper half-housing 3 serves to allow passage of control shaft 4.

Fig. 5 shows a valve 25 in another embodiment than drawn in the foregoing.

What is first of all noticeable is that, at variance with valve 1, valve 25 has a greater length. It has connecting stumps 27 furnished with flanges 26, the passages 28 of these stumps connecting to the openings 7, 8. Flanges 26 are provided with through-running holes 29, by means of which connecting flanges of lines to be connected can be coupled with bolts.

The cast iron valve ball 6 is the same as the valve ball 6 of valve 1 as in fig. 1. As will however be apparent from fig. 5, the PTFE coating layer 30 extends in this case over a greater length of control shaft 4. The PTFE lining 31, which co-operates for sealing with the PTFE layer 30 in the area of the spherical cavity of valve 25, extends, as the covering layer 10 of valve 1, via the wall of openings 7, 8 and passages 28 onto the outer surface of flanges 26. In addition the lining 31 extends along control shaft 4 over the same distance as covering layer 30. The resilient layer 32 consisting of perforated rubber also extends over this same length along control shaft 4. This construction varying from that of valve 1 ensures that it is virtually impossible for aggressive medium to reach parts susceptible to corrosion.

It is remarked in general that FEP, fluoroethylenepropene, is a more or less fluid substance and can therefore be processed by injection moulding. Due however to the manner of application an FEP layer can display a certain susceptibility to cracking. With a view to this the use of PTFE, polytetrafluoroethene, can be recommended, the base material of which is in powder form and which can be pressed and sintered.

The above described possible embodiments have in common that the liner body and the covering layer of the valve ball have a small coefficient of friction and seal exceedingly well relative to each other. Deformations are easily absorbed by the resilient layer consisting of perforated rubber which is applied between the wall of the cavity in the housing and the valve ball. The perforations ensure that the virtually non-compressible rubber can deflect during deformations. When a material is used that is compressible the perforations can be omitted.

In addition the lining of the cavity as well as the covering layer of the valve ball are undivided and form one whole. Finally, it is noted that the valve ball itself has to be a rigid, form retaining and pressure resistant part.

## Claims

1.  A ball valve (1) comprising a housing (2, 3) with a cavity in rotation symmetry around a symmetrical axis, in which a valve ball (6) is accommodated for rotation by means of a control shaft (4) rotatable from outside, which valve ball (6) is close fitting in the cavity and is provided with a passage (5), and which has the same form as the cavity and fits tightly into it, said cavity being accessible from the outside via two openings (7, 8) extending through the wall of said housing (2, 3), which passage can be moved between two extreme positions by rotation of said valve ball (6) by means of said control shaft (4), in the first of which positions said passage (5) connects both openings (7, 8) to each other and in the second of which said valve ball (6) impedes the connection between both openings (7, 8), said cavity and at least the surfaces connecting onto it of said openings (7, 8) in said housing (2, 3) being coated with an undivided lining (10) sealing against the surface of said valve ball, said lining (10) extending over a certain length along the control shaft (4), in form an axially extending sleeve, in the area of the cavity a resilient layer (12) for supporting the lining (10) being arranged,

    characterized in that

    the external surfaces and the passage of the valve ball (6) are coated with a continuous covering layer (9) and in that

a V-ring packing set (24) is arranged around the control shaft (4) and is subjected to pressure by a spring (15) which by one end presses on the axial outer side of the V-ring packing set (24) and by the other end is fixedly supported relative to the houding (2, 3), the axial inner side of the packing set exerting a pressure on the continuous covering layer (9) of the valve ball (6).

2. The ball valve according to claim 1, characterized in that the resilient layer (12) consists of perforated rubber.

3. The ball valve according to claim 1, characterized in that the lining (10) consists of PTFE or FEP.

4. The ball valve according to claim 1, characterized in that the covering layer (9) consists of PTFE, FEP or rubber.

5. The ball valve according to claim 1, characterized in that the lining (10) extends over the edge zones of the openings onto the outer surface of the housing (2, 3).

**Patentansprüche**

1. Kugelventil (1) mit einem Gehäuse (2, 3) mit einem um einen um eine Symmetrieachse rotationssymmetrischen Hohlraum, in dem eine Ventilkugel (6) für eine Drehung mit Hilfe einer Betätigungswelle (4) angeordnet ist, die von der Außenseite aus drehbar ist, wobei die Ventilkugel (6) mit engem Sitz in dem Hohlraum angeordnet und mit einem Kanal (5) versehen ist, wobei die Ventilkugel die gleiche Form wie der Hohlraum aufweist und eng in diesen eingepaßt ist, wobei der Hohlraum von der Außenseite aus über zwei Öffnungen (7, 8) zugänglich ist, die sich durch die Wand des Gehäuses (2, 3) erstrecken, wobei der Kanal durch eine Drehung der Ventilkugel (6) mit Hilfe der Betätigungswelle (4) zwischen zwei Endstellungen bewegbar ist, wobei der Kanal (5) in der ersten dieser Stellungen beide Öffnungen (7, 8) miteinander verbindet, während in der zweiten Stellung die Ventilkugel (6) die Verbindung zwischen den beiden Öffnungen (7, 8) sperrt, wobei der Hohlraum und zumindestens die Oberflächen, die diesen mit den Öffnungen (7, 8) in dem Gehäuse (2, 3) verbinden, mit einer ungeteilten Auskleidung (10) überzogen sind, die eine Abdichtung gegenüber der Oberfläche der Ventilkugel ergibt, wobei sich die Auskleidung (10) über eine gewisse Länge entlang der Betätigungswelle (4) in Form einer sich in Axialrichtung erstreckenden Hülse erstreckt, und wobei im Bereich des Hohlraumes eine elastische Schicht (12) zur Abstützung der Auskleidung (10) angeordnet ist, dadurch gekennzeichnet, daß die äußeren Oberflächen und der Kanal der Ventilkugel (6) mit einer kontinuierlichen Deckschicht (9) beschichtet sind, und das ein V-Ring-Packungssatz (24) um die Betätigungswelle (4) herum angeordnet und dem Druck einer Feder (15) ausgesetzt ist, die mit einem Ende auf die axial äußere Seite des V-Ring-Packungssatzes (24) drückt und mit ihrem anderen Ende fest gegenüber dem Gehäuse (2, 3) abgestützt ist, wobei die axial innere Seite des Packungssatzes einen Druck auf die kontinuierliche Deckschicht (9) der Ventilkugel (6) ausübt.

2. Kugelventil nach Anspruch (1), dadurch gekennzeichnet, daß die elastische Schicht (12) aus perforierten Gummi besteht.

3. Kugelventil nach Anspruch (1), dadurch gekennzeichnet, daß die Auskleidung (10) aus PTFE oder FEP besteht.

4. Kugelventil nach Anspruch (1) dadurch gekennzeichnet, daß die Deckschicht (9) aus PTFE, FEP oder Gummi besteht.

5. Kugelventil nach Anspruch (1), dadurch gekennzeichnet, daß sich die Auskleidung (10) über die Randbereiche der Öffnungen auf die Außenoberfläche des Gehäuses (2, 3) erstreckt.

**Revendications**

1. Vanne à boisseau sphérique (1) comprenant un carter (2,3) pourvu d'une cavité symétrique en rotation autour d'un axe de symétrie, dans laquelle un boisseau sphérique (6) est logé de manière à être mis en rotation de l'extérieur, au moyen d'un axe (4) de commande, le boisseau sphérique (6) étant ajusté étroitement dans la cavité et étant doté d'un passage (5), et le boisseau ayant la même forme que la cavité et étant ajusté de façon serrée dans celle-ci, ladite cavité étant accessible de l'extérieur via deux ouvertures (7, 8) s'étendant à travers la paroi du dit carter (2, 3), ce passage pouvant être déplacé entre deux positions extrêmes par rotation du dit boisseau sphérique (6) au moyen du dit axe (4) de commande, ledit passage (5) reliant les deux ouvertures (7, 8) l'une à l'autre dans la première des dites positions, et ledit boisseau sphérique (6) interdisant la communication entre les deux ouvertures (7, 8) dans la deuxième des dites positions, ladite cavité et au moins les surfaces des dites ouvertures (7, 8) du dit carter (2, 3), qui rejoignent la cavité, étant revêtues d'une garniture ininterrompue (10) faisant étanchéité contre la surface du dit boisseau sphérique, ladite garniture (10) s'étendant sur une certaine longueur le long de l'axe (4) de commande sous forme d'une gaine s'étendant axialement, une couche élastique (12) étant disposée dans la zone de la cavité pour soutenir la garniture (10),
caractérisée en ce que les surfaces externes et le passage du boisseau sphérique (6) sont revêtus d'une couche de revêtement ininterrompu (9), et en ce qu'un jeu (24) de garnitures d'étanchéité en V est disposé autour de l'axe (4) de commande et est soumis à une pression par un ressort (15) dont une extrémité appuie sur le côte extérieur du jeu (24) de garnitures d'étanchéité en V et dont l'autre extrémité est supportée de façon fixe par rapport au carter (2, 3), la face axialement intérieure du jeu de garnitures d'étanchéité en V exerçant une pression sur la couche de revêtement ininterrompu (9) du boisseau sphérique (6).

2. Vanne à boisseau sphérique selon la revendication 1, caractérisée en ce que la couche élastique (12) consiste en caoutchouc poreux.

3. Vanne à boisseau sphérique selon la revendication 1, caractérisée en ce que la garniture (10) consiste en PTFE ou en FEP.

4. Vanne à boisseau sphérique selon la revendication 1, caractérisée en ce que la couche (9) de revêtement consiste en PTFE, en FEP ou en caoutchouc.

5. Vanne à boisseau sphérique selon la revendication 1, caractérisée en ce que la garniture (10) s'étend sur les zones marginales des ouvertures jusque sur la surface extérieure du carter (2, 3).

FIG.5

FIG.1

FIG. 3

FIG.2

FIG.4